# EUROPEAN PATENT SPECIFICATION

(11) **EP 3 081 790 B1**
(45) Date of publication and mention of the grant of the patent: **31.12.2025**
(21) Application number: 15155893.9
(22) Date of filing: 20.02.2015
(51) Int. Cl.: F02D 35/02, F02D 21/08, F02D 19/06, F02D 19/10, F02M 26/22, F02M 26/34, F02M 26/35, F02D 41/00, F02B 25/02

(54) **DUAL-FUEL MARINE COMBUSTION ENGINE WITH EXHAUST GAS RECIRCULATION FOR SUPPRESSING PRE-IGNITION**
BIVALENTER SCHIFFSVERBRENNUNGSMOTOR MIT ABGASRÜCKFÜHRUNG ZUR UNTERDRÜCKUNG VON FRÜHZÜNDUNGEN
MOTEUR MARIN À COMBUSTION BICARBURANT AVEC RECIRCULATION DE GAZ D'ÉCHAPPEMENT POUR RÉDUIRE L'OCCURRENCE DU PRÉ-ALLUMAGE

(43) Date of publication of application: 19.10.2016
(73) Proprietor: WinGD Ltd., 8400 Winterthur (CH)
(72) Inventor: Sangram Kishore, Nanda, 8409 Winterthur (CH)
(74) Representative: Hepp Wenger Ryffel AG

(56) References cited:
- WO-A1-01/07774
- WO-A1-2012/021990
- WO-A1-2013/178691
- WO-A1-2014/040606
- WO-A1-95/27128
- US-A1- 2004 118 557

## Description

The present invention relates to a dual-fuel marine combustion engine, a method for controlling pre-ignition and speed of combustion in combustion in a dual-fuel marine combustion engine, a retrofit-kit for dual-fuel combustion engine and a computer programme product for controlling introduction of inert gas into a combustion chamber of a dual-fuel combustion engine according to the independent claims.

Due to more stringent air pollution rules in the maritime industry dual-fuel engines have become important engines in the ship-building industry.

There are dual-fuel engines on the market which are based either on the low pressure or on the high pressure concept. The low pressure dual-fuel engine is optimised to be a gas engine in otto cycle in a two stroke engine. The high pressure dual-fuel engine is a diesel cycle engine and requires substantially higher amounts of pilot fuel and leads to higher levels of NOx.

When gas fuel enters the combustion chamber of a combustion engine and mixes with the combustion air there is risk for uncontrolled combustion called pre-ignition. The pre-ignition mainly occurs due to radicals inside the combustion chamber. The occurrence of pre-ignition reduces the efficiency of the engine and leads to higher wear of the parts.

US2004/118557 A1 discloses a dual-fuel engine, which can be fuelled with diesel and gas. Diesel is used as a pilot fuel for igniting the gas. The pilot fuel is introduced to avoid a excessive knocking range for the engine.

WO2014040606 A1 discloses a diesel engine comprising a system for prevention of knocking. A control unit arranged for controlling the operation of the exhaust gas recirculation valve and the arrangement further comprises a knock sensor. The control unit is adapted for opening said exhaust gas recirculation valve in the event that knock is detected by said knock sensor.

It is therefore an object of the present invention to avoid the drawbacks of the prior art and provide a dual-fuel marine combustion engine, a method for controlling pre-ignition and speed of combustion, a retrofit-kit for a dual-fuel combustion engine and a computer programme product for controlling introduction of inert gas into a combustion chamber of a dual-fuel combustion engine which reduces the occurrence of pre-ignition. The object is achieved by a dual-fuel marine combustion engine, a method for controlling pre-ignition and speed of combustion, a retrofit-kit for a dual-fuel combustion engine and a computer programme product for controlling introduction of inert gas into a combustion chamber of a dual-fuel combustion engine according to the independent claims.

In particular, the object is achieved by a dual-fuel marine two-stroke dual-fuel low speed engine, preferably a low pressure dual-fuel engine, comprising at least one combustion chamber for ignition of a gas-air or liquid fuel-air mixture. The engine comprises an air inlet into the combustion chamber and an exhaust outlet out of the combustion chamber, wherein the engine comprises a gas mode of operation and a liquid fuel mode of operation. An inert gas inlet valve is controllable by a control unit such that an inert gas is introducible into the at least one combustion chamber, preferably through the air inlet, depending on predefined combustion states.

Such a dual-fuel engine leads to a more efficient combustion and less wear of the parts of the engine due to the possibility of avoiding pre-ignition and speed of combustion in the combustion chamber.

A predefined combustion state is a state that has been determined beforehand theoretically or in a test run or during operation of the engine where pre-ignition is likely to occur. Predefined combustion states according to the present invention are only determined by the likelihood of occurrence of pre-ignition. The predefined combustion states are not determined by any exhaust emission criteria.

A low speed engine according to the invention is an engine rotating at speeds up to 200 rpm. In particular, these low speed engines are large engines having diameters of the combustion chamber of 250mm to 1000mm bore.

A low pressure dual-fuel engine does not need any exhaust after treatment since tier 3 emissions are achieved in gas mode without any exhaust treatment and the minimum tier 2 level is achieved with liquid fuel. Therefore, low pressure dual-fuel engines are able to meet all global emission limits in every possible operational condition, ranging from idling speeds to full power output.

The inert gas inlet valve can be arranged either upstream or downstream the turbocharger depending on the engine being either a high pressure or a low pressure system. Alternatively, the inert gas inlet valve can be a separate part on the cylinder liner.

The inert gas can be introducible during gas mode of operation.

The introduction of inert gas during gas mode of operation leads to the suppression of pre-ignition and speed of combustion in gas mode. The efficiency of the engine is improved and the wear on the parts is reduced. Furthermore, the process during liquid fuel mode of operation is not influenced.

The inert gas is exhaust gas.

Using exhaust gas as inert gas leads to a very efficient process and a further cleaning of the exhaust gas and thereby turns optimisation of the emissions of the engine. Additionally, no additional inert gas reservoir is needed.

The engine comprises an exhaust gas recirculation system for introducing exhaust gas into the combustion chamber.

The use of an exhaust gas recirculation system is the introduction of a standard part leading to a new effect of supressing pre-ignition and speed of combustion.

The exhaust gas recirculation system comprises a blower, a cooling device, preferably a water separator, and a cleaning or scrubbing unit, preferably arranged in parallel to a turbo charger, more preferably arranged at the low pressure side of a turbo charger.

The arrangement on the low pressure side of the turbo charger is cheaper than the arrangement on the high pressure side.

This exhaust gas recirculation system enables cleaning, cooling and finally increasing the pressure of the exhaust gas before introducing into the turbo charger.

The exhaust gas recirculation system can be controllable by the control unit.

This way the exhaust gas recirculation system can only be activated in case pre-ignition occurs or is likely to occur. The exhaust gas recirculation system does not run continuously to reach certain emission levels.

The predefined combustion states can be dependent on temperature and pressure in the combustion chamber.

For example a cylinder pressure trace can be used to detect the start of pre-ignition in the combustion chamber. The specific pressure and/or temperature values are dependent on the gas and the certain engine used and have to be determined in advance or teached into the control unit during a test run or during use of the engine.

The object is further accomplished by a method for controlling pre-ignition in combustion in a dual-fuel gas-liquid fuel, in particular diesel, marine combustion engine as previously described. The method comprises a gas operation mode and a liquid fuel operation mode. An inert gas is introduced into the combustion chamber in the gas mode of operation during pre-defined combustion states.

The pre-defined combustion states are based on the occurrence or likelihood of occurrence of pre-ignition. The pre-defined combustion states are not depending on the emission levels of the engine.

By use of this method, the occurrence of pre-ignition can be controlled and obviated and thereby the engine efficiency is improved.

The pre-defined combustion states can be dependent on temperature and/or pressure in the combustion chamber.

This way inert gas is only introduced when needed.

A combustion state can be continuously determined during engine operation in gas mode operation.

Continuous determination leads to a continuous supervision of the combustion state and thereby to the possibility to introduce inert gas in situations where pre-ignition is likely to occur or already occurred. Furthermore, the liquid fuel mode is not influenced by the pre-ignition suppression by the inert gas.

Combustion states of the engine are determined beforehand in a test run and a pre-defined combustion states are determined based on the test run.

This way inert gas can be introduced without a continuous super vision or with an additional continuous super vision and the efficiency of the engine is enhanced.

A pre-defined combustion state can be added in case pre-ignition in the combustion chamber is detected, preferably detected in a state, for which pre-ignition was not known before.

This way the system learns during the operation of the engine and further pre-defined combustion states can be added.

The inert gas is exhaust gas, preferably recirculated exhaust gas.

This way exhaust gas is reused and emissions are lowered. Additionally, no further inert gas reservoir is needed.

The object is further accomplished by a retrofit-kit for a dual-fuel combustion engine, preferably a low pressure engine, marine engine having a gas operation mode and a diesel operation mode. The retrofit-kit comprises an exhaust gas recirculation system for recirculating exhaust gas into the combustion chamber during gas mode operation. The retrofit-kit further comprises an inert gas inlet valve and a control unit for controlling the exhaust gas recirculation system according to a method as described above.

By such a retrofit-kit even existing combustion engines can be updated to supress pre-ignition in a dual-fuel mode.

The object is further accomplished by a computer programme product for controlling introduction of inert gas into a combustion chamber of a combustion engine, preferably a low pressure dual-fuel combustion engine, as previously described. A method for controlling pre-ignition as previously described is executable by this computer program product.

The invention is further described by means of figures in embodiments:
- Fig. 1: a schematic representation of a device with low pressure exhaust gas recirculation
- Fig. 2: a schematic representation of a device with high pressure exhaust gas recirculation
- Fig. 3: a schematic flow diagram of a method for controlling pre-ignition
- Fig. 4: a diagram of a standard combustion cycle
- Fig. 5: a diagram of a combustion cycle with pre-ignition occurring.

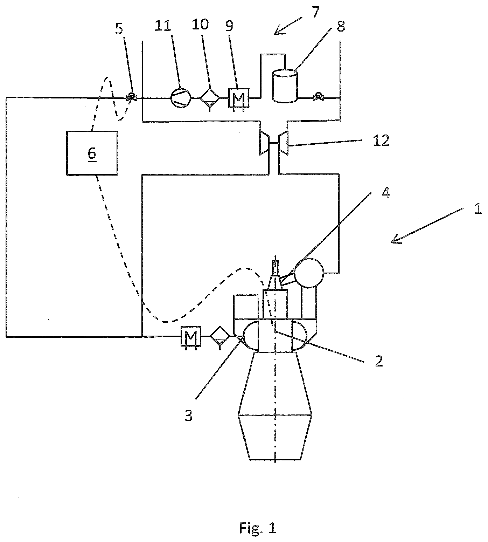

Figure 1 shows a schematic representation of a device with low pressure exhaust gas recirculation. In low pressure exhaust gas recirculation system the exhaust gas recirculation system 7 is arranged on the low pressure side of a turbo charger 12. The dual-fuel marine combustion engine 1 is a two-stroke low pressure dual-fuel engine 1. The dual-fuel engine 1 has two separate operation modes a gas mode operation and a liquid fuel mode operation. In both modes fuel is introduced into combustion chamber 2. Additionally, air is introduced into the combustion chamber 2 through air-inlet 3. After combustion the exhaust is released from the combustion chamber 2 to exhaust outlet 4. Downstream of the air inlet 3 a turbo charger 12 is arranged. By application of a turbo charger 12 the efficiency of the engine 1 is improved. Downstream of turbo charger 12 an exhaust gas recirculation system 7 is arranged. The exhaust gas recirculation system 7 comprises a cleaning unit 8, a cooling unit 9, a water separater 10 and a blower 11. The inert gas inlet valve 5 is opened by control unit 6 if a pre-defined combustion state is reached in combustion chamber 2. It is possible, to also connect the exhaust gas recirculation system 7 to the compression side of the turbo charger 12 to use the exhaust gas recirculation system during liquid fuel operation. The control unit 6 is in connection to a sensor or several sensors in combustion chamber 2 to determine if a pre-defined combustion state is present in the combustion chamber 2. The exhaust gas recirculation system 7 is only activated by control unit 6 in case a pre-define combustion state is sensed by the sensors. The sensors are pressure sensor and a temperature sensor in the combustion chamber 2.

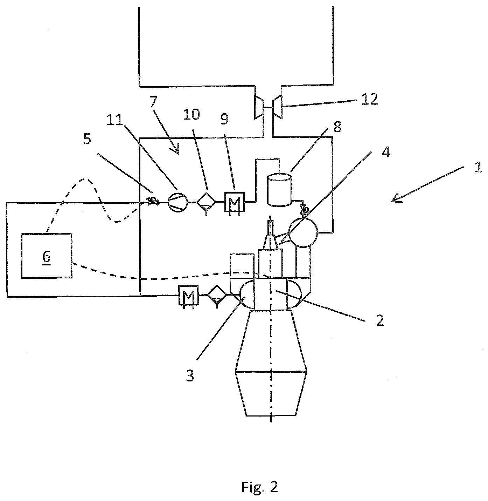

Figure 2 shows an alternative embodiment of figure 1 in which the exhaust gas recirculation system 7 is arranged on the high pressure side of the turbo charger 12. The exhaust gas recirculation system 7 comprises a cleaning unit 8, a cooling unit 9, a water separater 10, a blower 11 and inert gas inlet valve 5. The inert gas inlet valve 5 is controlled by control unit 6 and allows for the introduction of exhaust gas into the combustion chamber 2 based on the occurrence of pre-defined combustion states in the combustion chamber 2. For this purpose, control unit 6 is connected to one or more sensors determining the pre-defined combustion states. The sensors are pressure sensor and a temperature sensor in the combustion chamber 2. It is possible to simultaneously use the exhaust from the combustion chamber 2 for the turbo charger 12 and for exhaust gas recirculation by sharing the available exhaust to both fluid connection lines. The exhaust gas recirculation is stopped in gas mode operation as soon as a pre-defined combustion state is no longer recognised.

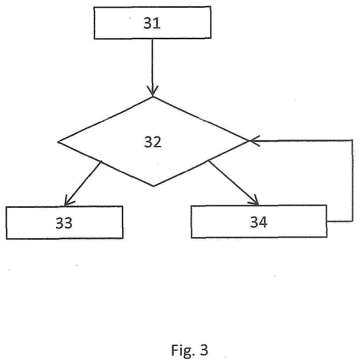

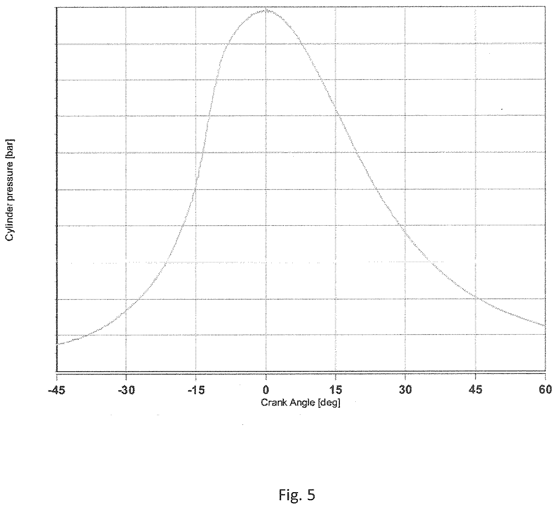

Figure 3 shows a schematic flow diagram of the method for controlling pre-ignition in combustion. When a gas mode 31 is started during engine use, the combustion is supervised continuously for pre-defined combustion states 32. The pre-defined combustion states 32 are defined by temperature and pressure in the combustion chamber 2 (see figure 1 and 2).An example for a pre-defined state 32 is shown in Figure 5. In case no pre-defined combustion state 32 is reached, no exhaust gas recirculation 33 is needed in gas mode of operation. In case a pre-defined combustion state 32 is recognised, the exhaust gas recirculation into the combustion chamber 2 is started. The exhaust gas recirculation is stopped in case no more pre-defined combustion state is recognised. The supervision of pre-defined combustion states is continuously conducted during gas mode of operation 31 of the engine 1.

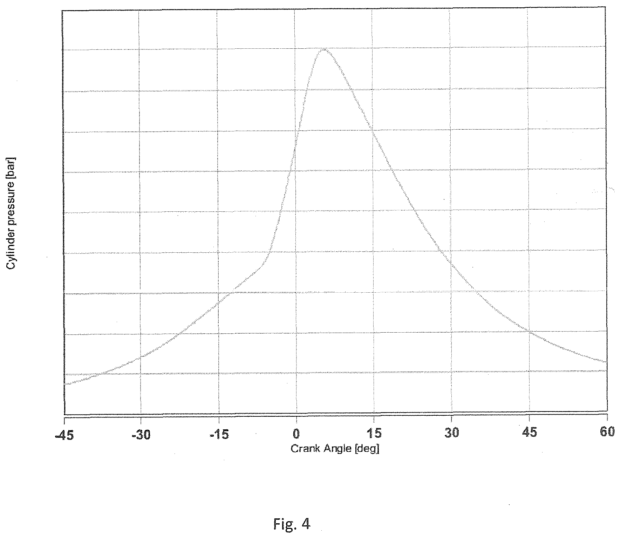

Figure 4 shows the process of combustion illustrated by the cylinder pressure over the crank angle during a standard combustion cycle without any pre-ignition. The peak of cylinder pressure occurs at about 5° crank angle and the peak itself is very sharp.

Figure 5 shows the same diagram of figure 4 in a pre-defined combustions state where pre-ignition occurs. The cylinder pressure during the occurrence of pre-ignition is already at its peak at a crank angle of 0°. Additionally, the peak is rather soft and the peak pressure is about 10% higher than the peak pressure of the standard cycle shown in figure 4.

## Claims

1. Dual-Fuel marine combustion engine (1), which is a two-stroke dual fuel low speed engine, comprising at least one combustion chamber (2) for ignition of a gas-air or liquid fuel-air mixture, an air inlet (3) into the combustion chamber (2) and an exhaust outlet (4) out of the combustion chamber (2), wherein the engine (1) comprises a gas mode of operation and a liquid fuel mode of operation and wherein the engine comprises a control unit (6), an inert gas inlet valve (5), an exhaust gas recirculation system (7) for introducing exhaust gas into the combustion chamber (2) and the exhaust gas recirculation system (7) at least comprises a blower (11), a cooling device (9) and a cleaning unit (8), preferably arranged in parallel to a turbocharger (12), more preferably arranged at the low pressure side of a turbocharger (12),
**characterized in that** the control unit (6) is configured to control the inert gas inlet valve (5) to reduce the occurrence of pre-ignition, such that an inert gas is introduced into the at least one combustion chamber (2) through the air inlet (3) depending on predefined combustion states for which pre-ignition occurs or is likely to occur, wherein the inert gas is exhaust gas, such that inert gas is introduced under gas mode of operation in a predefined combustion state, namely in a situation where pre-ignition is likely to occur or already occurred, wherein pressure and temperature values in the combustion chamber specific for the start of pre-ignition and dependent on the gas and the certain engine used are taught into the control unit during a test run or during use of the engine, and wherein the control unit (6) is in connection to a sensor or several sensors in the combustion chamber (2) to determine if the pre-defined combustion state is present in the combustion chamber (2).

2. Dual-fuel marine combustion engine (1) according to claim 1, wherein a cylinder pressure trace and a temperature trace are used to detect the start of pre-ignition in the combustion chamber (2).

3. Dual-fuel marine combustion engine (1) according to any one of the preceding claims, **characterized in that** the predefined combustion state is dependent on temperature and pressure in the combustion chamber (2).

4. Method for controlling pre-ignition in combustion in a dual-fuel, gas-liquid fuel, marine combustion engine (1) according to any one of claims 1 to 3, having a gas operation mode and a liquid fuel operation mode **characterized in that** an inert gas is introduced into the combustion chamber (2) under gas mode of operation during a pre-defined combustion state, namely in a situation where pre-ignition is likely to occur or already occurred, and wherein the inert gas is exhaust gas, preferably recirculated exhaust gas,
wherein pressure and temperature values in the combustion chamber specific for the start of pre-ignition and dependent on the gas and the certain engine used are taught into a control unit during a test run or during use of the engine, and
wherein the control unit (6) is in connection to a sensor or several sensors in the combustion chamber (2) to determine if the pre-defined combustion state is present in the combustion chamber (2).

5. Method according to claim 4 **characterized in that** the pre-defined combustion state is dependent on temperature and pressure in the combustion chamber (2).

6. Method according to any one of claims 4 or 5, **characterized in that** the combustion state is continuously determined during engine operation in gas mode operation.

7. Method according to any one of claims 4 to 6, characterized that the pre-defined combustion state is added in case pre-ignition in the combustion chamber (2) is detected.

8. Retrofit-Kit for a low pressure dual-fuel combustion marine engine, having a gas operation mode and a diesel operation mode comprising an exhaust gas recirculation system (7) for recirculating exhaust gas into the combustion chamber (2) during gas mode operation, an inert gas inlet valve (5) and a control unit (6) for controlling the exhaust gas recirculation system (7) and for reducing the occurrence of pre-ignition using predefined combustion states where pre-ignition occurs or is likely to occur, wherein the control unit (6) of the retrofit-kit is configured to perform a method according to any one of the claims 4 to 7.

9. Computer program product comprising instructions to cause the control unit (6) of the dual fuel marine engine (1) according to any one of claims 1 to 3 to execute the steps of the method of any one of claims 4 to 7.

## Patentansprüche

1. Bivalenter Schiffsverbrennungsmotor (1), der ein bivalenter Zweitakt-Langsamläufer ist, mit mindestens einer Brennkammer (2) zur Zündung eines Gas-Luft- oder Flüssigbrennstoff-Luft-Gemisches, einem Lufteinlass (3) in die Brennkammer (2) und einem Abgasauslass (4) aus der Brennkammer (2), wobei der Motor (1) einen Gasbetriebsmodus und einen Flüssigkraftstoffbetriebsmodus umfasst und wobei der Motor eine Steuereinheit (6), ein Inertgas-Einlassventil (5), ein Abgasrückführungssystem (7) zum Einleiten von Abgas in die Brennkammer (2) umfasst und das Abgasrückführungssystem (7) mindestens ein Gebläse (11), eine Kühlvorrichtung (9) und eine Reinigungseinheit (8) umfasst, die vorzugsweise parallel zu einem Turbolader (12) angeordnet ist, noch bevorzugter auf der Niederdruckseite eines Turboladers (12) angeordnet ist,
**dadurch gekennzeichnet, dass** die Steuereinheit (6) so konfiguriert ist, dass sie das Inertgaseinlassventil (5) so steuert, dass das Auftreten einer Frühzündung reduziert wird, sodass ein Inertgas in die mindestens eine Brennkammer (2) durch den Lufteinlass (3) eingeführt wird, und zwar in Abhängigkeit von vordefinierten Verbrennungszuständen, bei denen eine Vorentzündung auftritt oder wahrscheinlich auftritt, wobei das Inertgas Abgas ist, so dass Inertgas im Gasbetriebsmodus bei vordefinierten Verbrennungszuständen eingeführt wird, nämlich in einer Situation, in der eine Frühzündung wahrscheinlich auftritt oder bereits aufgetreten ist, wobei Druck- und Temperaturwerte in der Brennkammer, die für den Beginn der Vorentzündung spezifisch sind und abhängig vom verwendeten Gas und dem bestimmten Motor während eines Testlaufs oder während des Betriebs des Motors in die Steuereinheit eingegeben werden, und wobei die Steuereinheit (6) mit einem Sensor oder mehreren Sensoren in der Brennkammer (2) verbunden ist, um festzustellen, ob der vordefinierte Verbrennungszustand in der Brennkammer (2) vorliegt.

2. Bivalenter Schiffsverbrennungsmotor (1) gemäß Anspruch 1, wobei eine Zylinderdruckkurve und eine Temperaturkurve verwendet werden, um den Beginn der Frühzündung in der Brennkammer (2) zu erkennen.

3. Bivalenter Schiffsverbrennungsmotor (1) gemäß einem der vorstehenden Ansprüche, **dadurch gekennzeichnet, dass** der vordefinierte Verbrennungszustand von der Temperatur und dem Druck in der Brennkammer (2) abhängt.

4. Verfahren zur Steuerung der Frühzündung bei der Verbrennung in einem Bivalenten Schiffsverbrennungsmotor (1) für gasförmigen und flüssigen Kraftstoff gemäß einem der Ansprüche 1 bis 3, der einen Gasbetriebsmodus und einen Flüssigkraftstoffbetriebsmodus aufweist, **dadurch gekennzeichnet, dass** während eines vordefinierten Verbrennungszustands, nämlich in einer Situation, in der eine Frühzündung wahrscheinlich ist oder bereits aufgetreten ist, ein Inertgas in die Brennkammer (2) im Gasbetriebsmodus eingeleitet wird, und wobei das Inertgas Abgas, vorzugsweise rückgeführtes Abgas, ist,
wobei Druck- und Temperaturwerte in der Brennkammer, die für den Beginn der Frühzündung spezifisch und vom Gas und dem bestimmten verwendeten Motor abhängig sind, während eines Testlaufs oder während des Betriebs des Motors in eine Steuereinheit eingegeben werden, und
wobei die Steuereinheit (6) mit einem Sensor oder mehreren Sensoren in der Brennkammer (2) verbunden ist, um festzustellen, ob der vordefinierte Verbrennungszustand in der Brennkammer (2) vorliegt.

5. Verfahren nach Anspruch 4, **dadurch gekennzeichnet, dass** der vordefinierte Verbrennungszustand von der Temperatur und dem Druck in der Brennkammer (2) abhängt.

6. Verfahren nach einem der Ansprüche 4 oder 5, **dadurch gekennzeichnet, dass** der Verbrennungszustand während des Motorbetriebs im Gasbetrieb kontinuierlich bestimmt wird.

7. Verfahren nach einem der Ansprüche 4 bis 6, **dadurch gekennzeichnet, dass** der vordefinierte Verbrennungszustand hinzugefügt wird, wenn eine Frühzündung in der Brennkammer (2) festgestellt wird.

8. Nachrüstsatz für einen Niederdruck- Bivalenten Schiffsverbrennungsmotor für Schiffe, der einen Gasbetriebsmodus und einen Dieselbetriebsmodus aufweist, mit einem Abgasrückführungssystem (7) zum Rückführen von Abgas in die Brennkammer (2) während des Gasbetriebs, einem Inertgas-Einlassventil (5) und einer Steuereinheit (6) zum Steuern des Abgasrückführungssystems (7) und zum Verringern des Auftretens einer Frühzündung unter Verwendung vordefinierter Verbrennungszustände, in denen eine Frühzündung auftritt oder wahrscheinlich auftritt, wobei die Steuereinheit (6) des Nachrüstsatzes so konfiguriert ist, dass sie ein Verfahren gemäß einem der Ansprüche 4 bis 7 ausführt.

9. Computerprogrammprodukt zur Steuerung der Einleitung von Inertgas in eine Brennkammer (2) eines Niederdruck-Bivalenten Schiffsverbrennungsmotors, vorzugsweise gemäß einem der Ansprüche 1 bis 3, wobei ein Verfahren gemäß einem der Ansprüche 4 bis 7 ausführbar ist.

## Revendications

1. Moteur à combustion marine à double carburant (1), qui est un moteur à deux temps à double carburant à basse vitesse de type , comprenant au moins une chambre de combustion (2) pour l'allumage d'un mélange gaz-air ou carburant liquide-air, une entrée d'air (3) dans la chambre de combustion (2) et une sortie d'échappement (4) hors de la chambre de combustion (2), dans lequel le moteur (1) comprend un mode de fonctionnement au gaz et un mode de fonctionnement au carburant liquide et dans lequel le moteur comprend une unité de commande (6), une soupape d'admission de gaz inerte (5), un système de recirculation des gaz d'échappement (7) pour introduire les gaz d'échappement dans la chambre de combustion (2) et le système de recirculation des gaz d'échappement (7) comprend au moins un ventilateur (11), un dispositif de refroidissement (9) et une unité de nettoyage (8), de préférence disposée en parallèle à un turbocompresseur (12), de préférence disposée du côté basse pression d'un turbocompresseur (12),
**caractérisé en ce que** l'unité de commande (6) est configurée pour commander la soupape d'admission de gaz inerte (5) afin de réduire l'apparition d'un préallumage , de telle sorte qu'un gaz inerte est introduit dans la au moins une chambre de combustion (2) par l' d'admission d'air (3) en fonction d'états de combustion prédéfinis pour lesquels un préallumage-allumage se produit ou est susceptible de se produire, dans lequel le gaz inerte est un gaz d'échappement, de telle sorte que le gaz inerte est introduit en mode de fonctionnement au gaz, état de combustion prédéfini, à savoir dans une situation où un préallumage est susceptible de se produire ou s'est déjà produit , dans lequel les valeurs de pression et de température dans la chambre de combustion spécifiques au début du préallumage et dépendantes du gaz et du moteur utilisé sont enseignées à l'unité de commande pendant un essai ou pendant l'utilisation du moteur et dans lequel l'unité de commande (6) est reliée à un ou plusieurs capteurs dans la chambre de combustion (2) afin de déterminer si l'état de combustion prédéfini est présent dans la chambre de combustion (2) .

2. Moteur à combustion marine à double carburant (1) selon la revendication 1, dans lequel une courbe de pression dans le cylindre et une courbe de température sont utilisées pour détecter le début de la pré-allumage dans la chambre de combustion (2).

3. Moteur à combustion marine à double carburant (1) selon l'une quelconque des revendications précédentes, **caractérisé en ce que** l'état de combustion prédéfini dépend de la température et de la pression dans la chambre de combustion (2).

4. Procédé de contrôle du préallumage dans la combustion d'un moteur marin à double carburant, carburant gaz-liquide, selon l'une quelconque des revendications 1 à 3, ayant un mode de fonctionnement au gaz et un mode de fonctionnement au carburant liquide, **caractérisé en ce qu'**un gaz inerte est introduit dans la chambre de combustion (2) en mode de fonctionnement au gaz pendant un état de combustion prédéfini, à savoir dans une situation où un préallumage est susceptible de se produire ou s'est déjà produit, et dans lequel le gaz inerte est un gaz d'échappement, de préférence un gaz d'échappement recyclé,
dans lequel les valeurs de pression et de température dans la chambre de combustion spécifiques au début de la pré-allumage et dépendantes du gaz et du moteur utilisé sont enseignées à une unité de commande pendant un essai ou pendant l'utilisation du moteur, et
dans lequel l'unité de commande (6) est reliée à un ou plusieurs capteurs dans la chambre de combustion (2) afin de déterminer si l'état de combustion prédéfini est présent dans la chambre de combustion (2).

5. Procédé selon la revendication 4, **caractérisé en ce que** l'état de combustion prédéfini dépend de la température et de la pression dans la chambre de combustion (2).

6. Procédé selon l'une quelconque des revendications 4 ou 5, **caractérisé en ce que** l'état de combustion est déterminé en continu pendant le fonctionnement du moteur en mode gaz.

7. Procédé selon l'une quelconque des revendications 4 à 6, **caractérisé en ce que** l'état de combustion prédéfini est ajouté dans le cas où un préallumage est détecté dans la chambre de combustion (2).

8. Kit de conversion pour un moteur marin à double carburant à basse pression, comportant un mode de fonctionnement au gaz et un mode de fonctionnement au diesel, comprenant un système de recirculation des gaz d'échappement (7) pour recirculer les gaz d'échappement dans la chambre de combustion (2) pendant le fonctionnement en mode gaz, une soupape d'admission de gaz inerte (5) et une unité de commande (6) pour commander le système de recirculation des gaz d'échappement (7) et pour réduire l'apparition d'un préallumage en utilisant des états de combustion prédéfinis dans lesquels un préallumage se produit ou est susceptible de se produire, dans lequel l'unité de commande (6) du kit de mise à niveau est configurée pour exécuter un procédé selon l'une quelconque des revendications 4 à 7.

9. Produit logiciel pour commander l'introduction de gaz inerte dans une chambre de combustion (2) d'un moteur à combustion à double carburant à basse pression, de préférence selon l'une quelconque des revendications 1 à 3, dans lequel un procédé selon l'une quelconque des revendications 4 à 7 est exécutable.
